# FASCICULE DE BREVET EUROPEEN

(11) **EP 3 242 859 B1**
(45) Date de publication et mention de la délivrance du brevet: **08.05.2019**
(21) Numéro de dépôt: 16702755.6
(22) Date de dépôt: 08.01.2016
(51) Int. Cl.: C02F 3/04, C02F 3/30, C02F 3/32, C02F 101/16, C02F 103/32

(54) **DISPOSITIF DE TRAITEMENT DES EAUX USÉES, DE TYPE FILTRE PLANTÉ À PERCOLATION VERTICALE, COMPRENANT UN SYSTÈME D'AÉRATION ACTIF D'UNE COUCHE INFÉRIEURE SATURÉE**
ABWASSERBEHANDLUNGSVORRICHTUNG WIE Z. B. EIN BEPFLANZTER FILTER MIT VERTIKALER PERKOLATION MIT EINEM SYSTEM ZUR AKTIVEN BELÜFTUNG EINER GESÄTTIGTEN UNTEREN SCHICHT
SEWAGE TREATMENT DEVICE, SUCH AS A VERTICAL-PERCOLATION PLANTED FILTER, COMPRISING A SYSTEM FOR ACTIVE AERATION OF A SATURATED LOWER LAYER

(30) Priorité: 09.01.2015 FR 1550180
(43) Date de publication de la demande: 15.11.2017
(73) Titulaire: OPURE, 37360 Beaumont la Ronce (FR)
(72) Inventeur: PAING, Joëlle, 37340 Ambillou (FR); CHAZARENC, Florent, 44470 Carquefou (FR); GAGNON, Vincent, Québec Québec J0N 1H0 (CA)
(74) Mandataire: Monni, Richard
(86) Numéro de dépôt international: PCT/FR2016/050033
(87) Numéro de publication internationale: WO 2016/110657

(56) Documents cités:
- DE-C1- 4 225 699
- FR-A1- 2 973 796
- US-A1- 2003 024 874

## Description

Le domaine de l'invention est celui de la conception et de la fabrication de systèmes de traitement des eaux usées. Plus précisément, l'invention concerne la conception d'un dispositif de traitement des eaux usées de type filtre planté à percolation verticale.

Le traitement des eaux usées par filtres plantés connaît un très fort développement depuis ces vingt dernières années. Ce type de système d'épuration est appliqué principalement pour le traitement des effluents domestiques des petites collectivités. Il présente de nombreux avantages :
- une bonne intégration paysagère ;
- un entretien facile et peu coûteux ;
- une faible production de boues ;
- pas de consommation d'énergie ni de produits chimiques ;
- des bonnes performances épuratoires ;
- une bonne adaptation aux variations de charge.

Les filtres plantés peuvent être à percolation verticale ou horizontale.

Dans les filtres horizontaux, l'arrivée des effluents dans le massif s'effectue sur un des côtés, ils cheminent alors horizontalement dans le massif pour être récupérés à l'autre extrémité. Dans ce cas, le niveau d'eau dans le massif est maintenu à environ 5 à 10 cm de la surface et la majeure partie du filtre est alors en milieu saturé et anoxique. Dans ces filtres, l'alimentation est généralement continue et les apports d'oxygène sont fortement réduits. Les conditions sont alors favorables pour des réactions de dénitrification effectuées par des bactéries dénitrifiantes (conduisant à la réduction des nitrates en composés gazeux). Il est à noter que ces bactéries sont hétérotrophes et ont donc besoin de matière organique pour se développer. Les vitesses d'écoulement étant plus lentes et les temps de contact avec les bactéries plus élevés, ces filtres favorisent l'élimination de matière organique difficilement biodégradable.

Dans des filtres verticaux, les eaux usées sont envoyées en surface, percolent verticalement à travers le massif filtrant et sont récupérées dans le fond par un réseau de drainage. Ces filtres sont majoritairement maintenus en condition aérobie, grâce à des mécanismes d'aération « passive » :
- l'apport d'O₂ excrété par les racines des plantes ;
- la convection, liée à l'effet piston du déplacement des lames d'eau apportées à chaque bâchée ;
- la diffusion, à la fois depuis la surface et par le fond grâce au réseau de drains relié à des cheminées d'aération (elle permet le renouvellement de la phase gazeuse des espaces inter-granulaires en milieu non saturé).

Les principaux polluants éliminés sont les matières en suspension, les matières organiques ainsi que les composés azotés. Dans les filtres verticaux, les mécanismes épuratoires sont régis par des mécanismes physiques (filtration, adsorption) et biologiques (dégradation microbienne aérobie, nitrification, assimilation végétale). A noter que dans ces filtres, le traitement de l'azote global est faible car il se limite à la nitrification par les bactéries nitrifiantes en conditions aérobies (conduisant à l'oxydation de l'azote ammoniacal en nitrites puis en nitrates).

Dans ces dispositifs, les rôles principaux des végétaux plantés en surface sont les suivants :
- maintenir la perméabilité du massif filtrant grâce aux voies hydrauliques créées par leurs tiges, racines et rhizomes (prévention des phénomènes de colmatage) ;
- favoriser l'activité microbienne aérobie à proximité des racines et rhizomes qui servent de support de biofilm, notamment grâce à l'apport d'oxygène des végétaux ;
- favoriser la déshydratation des matières solides retenues en surface le cas échéant, via l'évapotranspiration des roseaux.

En France, la filière la plus largement appliquée est constituée de deux étages (ou bassins) de filtres verticaux en série, avec une surface totale de filtres de 2 à 2,5 m²/EH (1,2 à 1,5 m²/EH au premier étage et 0,8 à 1 m²/EH au deuxième étage ; avec EH = Equivalent-Habitant, correspond à la pollution journalière générée par une personne, soit le plus souvent 60 gDBO₅/j, 120 gDCO/j, 90 gMES/j, 15 gNTK/j et 2.4 gPT/j). Une des particularités de cette filière est de ne pas comprendre de prétraitement (excepté un dégrillage grossier) et d'envoyer les effluents bruts directement sur la surface du premier étage. Ainsi, les matières particulaires contenues dans les eaux usées sont retenues par des mécanismes de filtration en surface, où elles sont progressivement déshydratées et minéralisées. L'accumulation de boues est ainsi faible (environ 1,5 cm/an), ce qui entraîne des fréquences de curage très espacées (une fois tous les 10 à 15 ans). De plus, la qualité des boues est compatible avec une revalorisation agricole sans traitement complémentaire.

Il est maintenant connu que cette filière, constituée de deux filtres verticaux en série, permet d'obtenir des rendements épuratoires élevés pour les effluents domestiques (> 90%) sur les polluants : matières en suspension (MES), matières organiques (DBO₅ et DCO) et azote réduit (NTK). En revanche, les performances sont limitées (< 30%) pour l'azote global (NGL) et le phosphore (PT). Cette filière présente aussi comme inconvénient d'avoir une emprise foncière relativement élevée (2 à 2,5 m²/EH).

L'art antérieur a proposé d'autres solutions.

On retrouve ainsi des filières mixtes constituées par l'association de filtres de type vertical et horizontal, en série, notamment pour améliorer les performances sur l'azote global en favorisant les réactions de nitrification et dénitrification. Cependant, pour atteindre des rendements élevés (> 85%) sur l'azote global (NGL), on a généralement au moins trois étages (bassins) avec une recirculation, entrainant une emprise foncière élevée (> 4 m²/EH).

On retrouve également des solutions qui font appel à des filtres compacts à percolation verticale avec superpositions de plusieurs couches de matériaux et l'utilisation de matériau filtrant poreux, capable de favoriser le développement de micro-organismes et permettant de réduire l'emprise foncière et de limiter les coûts d'exploitation. Néanmoins, ces filtres présentent des risques de colmatage de la couche supplémentaire de granulométrie inférieure, notamment dans le cas d'effluents fortement chargés. De plus, les nitrifications sont souvent incomplètes et ces filtres présentent de faibles rendements sur l'azote global (< 30%).

Plus récemment, une autre solution a été proposée par l'art antérieur, consistant à mettre en oeuvre des filtres compacts à percolation verticale avec une couche inférieure saturée en eau et une couche supérieure non saturée. Cette solution permet d'améliorer les performances sur l'azote global en favorisant les réactions de nitrification et dénitrification, ainsi que de réduire l'emprise foncière et limiter les coûts d'exploitation. Cette proposition présente cependant des difficultés à traiter des effluents fortement chargés (agro-alimentaires, agricoles...) avec un seul bassin, une nitrification souvent incomplète et un rendement sur l'azote global limité à 70%.

Il est connu de l'art antérieur la solution décrite dans le document de brevet publié sous le numéro DE 42 25 699 C1. Cette solution met en oeuvre un bassin de purification dans lequel les eaux usées s'écoulent de manière verticale au travers de quatre couches superposées de matériaux filtrants. Ce dispositif cherche à optimiser les réactions de dénitrification mais ne produit pas en pratique des résultats optimaux.

L'art antérieur propose aussi une solution décrite dans le document de brevet publié sous le numéro FR 2 973 796 A1. Le dispositif de traitement des eaux usées décrit dans ce document comprend un bassin de purification dans lequel les eaux usées s'écoulent de manière verticale. Ce dispositif ne permet néanmoins pas de traiter efficacement des effluents fortement chargés en pollution dissoute organique et azotée.

L'art antérieur propose encore une solution décrite dans le document de brevet publié sous le numéro US 2003/024874 A1. Le dispositif de traitement des eaux usées décrit dans ce document comprend plusieurs bassins d'épuration montés en série. En conséquence, l'emprise foncière de ce dispositif est importante.

L'invention a notamment pour objectif de pallier ces inconvénients de l'art antérieur.

Plus précisément, l'invention a pour objectif de proposer un système de traitement des eaux usées performant et présentant une emprise foncière réduite.

L'invention a également pour objectif de proposer un tel système qui permette de traiter des effluents fortement chargés avec un seul bassin, un rendement de nitrification plus élevé que ce qui est permis par les solutions à un seul bassin proposées par l'art antérieur et un fort rendement sur l'azote global.

L'invention a encore pour objectif de proposer un tel système qui présente des coûts d'exploitation contenus.

Ces objectifs, ainsi que d'autres qui apparaîtront par la suite, sont atteints grâce à l'invention qui a pour objet un dispositif de traitement des eaux usées de type filtre planté dans lequel la circulation des eaux usées est à écoulement vertical, le dispositif comprenant un bassin de purification destiné à recevoir des eaux usées, le bassin comportant au moins deux couches superposées de matériaux filtrants :
- une couche inférieure saturée en eaux située dans le fond du bassin et comprenant des moyens de drainage ;
- une couche supérieure non saturée en eaux située au-dessus de la couche inférieure, la couche supérieure comportant des moyens d'aération passive, les moyens d'aération passive comportant un réseau de drains d'aération situé au fond de la couche supérieure ;
caractérisé en ce que le dispositif comprend un système d'aération actif de la couche inférieure saturée, le système d'aération actif étant situé dans le fond de la couche inférieure et étant réparti essentiellement sur toute la surface couverte par la couche inférieure du bassin de purification, le système d'aération actif étant destiné à aérer de manière homogène la totalité de la couche inférieure, le système d'aération actif de la couche inférieure saturée étant un système d'aération actif intermittent,
en ce que le dispositif comprend des moyens de rétention d'eau aptes à maintenir, dans le bassin en fonctionnement, une garde d'eau d'une hauteur prédéterminée qui correspond à la totalité de la hauteur de la couche inférieure, et en ce que la couche supérieure présente une hauteur H2 > 30 cm.

L'expression « moyens d'aération passive » désigne par exemple l'apport d'02 excrété par les racines des plantes ou encore la diffusion depuis la surface. Ces systèmes permettent de maintenir la couche supérieure non saturée en eaux en condition aérobie.

La couche supérieure non saturée ainsi réalisée permet au filtre de favoriser le traitement des matières solides particulaires retenues en surface et de ne pas nécessiter un prétraitement particulier pour éliminer au moins une grande partie de ces dernières.

En effet, un tel prétraitement, par exemple réalisé par une fosse septique, un décanteur digesteur ou encore un réacteur anaérobie, oblige à une extraction régulière de boues non déshydratées et souvent peu minéralisées, qui oblige souvent à un traitement complémentaire avant une revalorisation agricole, entraînant des contraintes et coûts d'exploitation élevés.

Grâce au principe de l'invention, la couche inférieure permet un traitement avantageux de la pollution dissoute. En effet, le système d'aération actif permet d'augmenter les cinétiques de dégradation, en particulier pour les effluents fortement chargés en pollution dissoute organique et azotée.

Le dispositif de traitement selon l'invention est adapté au traitement d'eaux usées domestiques rejetées par une collectivité mais aussi pour le traitement des eaux usées rejetées par une habitation de type individuelle. Il peut également être appliqué pour le traitement d'effluents industriels, ou agricoles. En particulier, ce dispositif est avantageusement adapté au traitement d'effluents fortement chargés en matière organique et contenant des matières particulaires telles que générées par les industries agroalimentaires (industrie de la viande, industrie des fruits et légumes, boulangerie/pâtisserie industrielle, fromagerie/industrie laitière, cave vinicole...).

Un dispositif de traitement selon l'invention permet ainsi de traiter des effluents fortement chargés avec un seul bassin, d'où une emprise foncière réduite.

De plus, le dispositif permet le traitement d'effluents domestiques et d'effluents industriels ou agricoles contenant des matières particulaires, sans prétraitement (excepté un dégrillage grossier), tout en assurant des rendements élevés sur les paramètres MES, DCO, DBO₅, NTK, ainsi que sur l'azote global.

Il est en outre à noter que, l'invention conserve certains avantages des filtres plantés : bonne intégration paysagère, entretien facile et peu coûteux, faible production de boues, consommation d'énergie plus faible que les procédés « intensifs » type boues activées, pas de consommation de produits chimiques, performances épuratoires élevées et une bonne adaptation aux variations de charge.

La hauteur minimum H2 de la couche supérieure est particulièrement importante, notamment afin de favoriser la déshydratation des matières particulaires par un mécanisme de drainage. En effet, la déshydratation des matières particulaires favorisée grâce à cette caractéristique permet au dispositif selon l'invention de s'affranchir des prétraitements retrouvés dans les solutions proposées par l'art antérieur.

Le réseau de drains d'aération est particulièrement adapté dans le cas des effluents chargés en matières particulaires, dans le but de favoriser le traitement des matières particulaires retenues en surface par des mécanismes de déshydratation par drainage et de minéralisation aérobie.

Grâce au système d'aération actif situé dans le fond de la couche inférieure et qui est réparti essentiellement sur toute la surface couverte par la couche inférieure, les cinétiques de dégradation dans la couche inférieure saturée peuvent ainsi être homogènes dans ladite couche inférieure.

L'expression « système d'aération actif » désigne bien entendu un système d'aération dans lequel l'air est approvisionné de manière active, par exemple à l'aide de moyens qui peuvent prendre la forme de pompes, de ventilateurs ou encore de surpresseurs.

Selon une caractéristique particulière, le bassin de purification comporte des systèmes d'apport d'eaux usées par bâchées.

Un tel système d'apport d'eaux usées permet d'améliorer l'oxygénation de la couche supérieure. En effet, l'arrivée des effluents se faisant de manière discontinue (par « bâchée ») on retrouve un effet de convection, liée à l'effet piston du déplacement des lames d'eau apportées à chaque bâchée. De plus, ce système permet d'obtenir une bonne répartition des eaux usées sur toute la surface du bassin de purification.

Le système d'aération actif de la couche inférieure saturée est un système d'aération actif intermittent.

Le système d'aération ainsi conçu permet d'une part de réduire la consommation d'énergie, et d'autre part d'améliorer le traitement de l'azote global en favorisant les réactions de nitrification et dénitrification.

Selon un mode de réalisation particulier de l'invention, le système d'aération actif intermittent comporte un programmateur horaire.

Par exemple, le système peut être programmé pour réaliser des cycles d'une heure d'aération suivie d'une heure d'arrêt de l'aération.

Selon un mode de réalisation préférentiel, le dispositif comporte des capteurs destinés à déterminer des paramètres d'oxygène dissous et/ou de potentiel d'oxydo-réduction dans la couche inférieure, et le système d'aération actif intermittent comporte un interrupteur automatique couplé aux capteurs.

Selon une caractéristique avantageuse, le dispositif de traitement des eaux usées comprend une pluralité de bassins de purification montés en parallèle.

Préférentiellement, les systèmes d'aération actifs intermittents de la couche inférieure saturée de chaque bassin de purification forment un réseau d'aération, et le réseau d'aération comporte des moyens d'alimentation en air en alternance des systèmes d'aération actifs intermittents.

Ces moyens d'alimentation en air en alternance peuvent prendre la forme de pompes, de ventilateurs ou encore de surpresseurs qui alimentent alternativement les systèmes d'aération grâce à des vannes.

Selon une autre caractéristique avantageuse, les systèmes d'apport d'eaux usées de chaque bassin de purification forment un réseau d'apport d'eaux usées, le réseau d'apport d'eaux usées comportant des moyens d'alimentation en alternance des systèmes d'apport d'eaux usées.

Les moyens d'alimentation en alternance des systèmes d'apport permettent notamment d'avoir des périodes de repos favorables à la déshydratation et la minéralisation des matières particulaires retenues en surface. De plus, un tel dispositif comportant une pluralité de bassins de purification permet ainsi de traiter un flot continu d'eaux usées tout en permettant l'application de ces périodes de repos.

D'autres caractéristiques et avantages de l'invention apparaîtront plus clairement à la lecture de la description suivante de modes de réalisation préférentiels de l'invention, donnés à titre d'exemples illustratifs et non limitatifs, et des dessins annexés parmi lesquels :
- la figure 1 est une représentation schématique selon une vue de côté du dispositif de traitement des eaux usées selon l'invention ;
- la figure 2 est une représentation schématique selon une vue de dessus du dispositif de traitement des eaux usées selon l'invention.

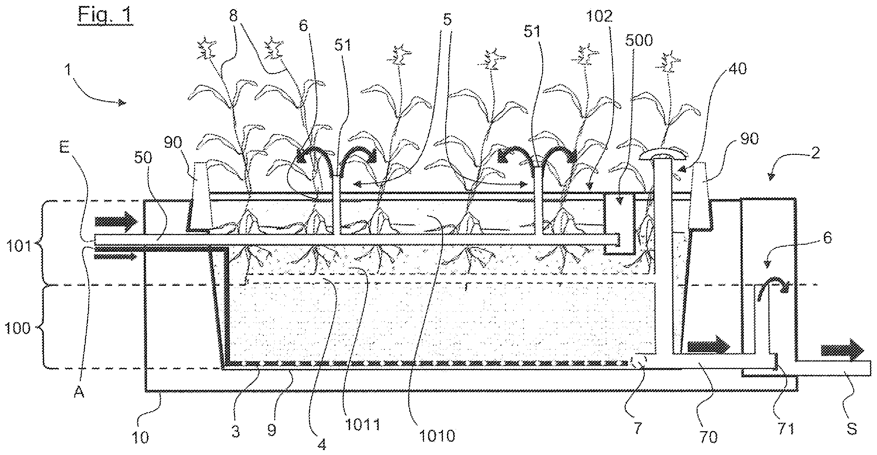

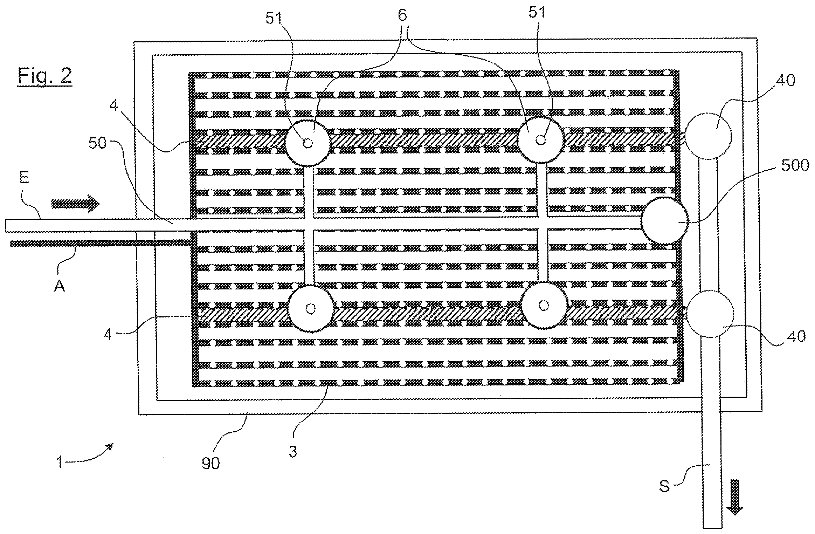

Tel que représenté sur les figures 1 et 2, le dispositif 1 de traitement des eaux usées est de type filtre planté à percolation verticale (impliquant par définition une circulation des eaux usées dans le dispositif selon un écoulement vertical).

Le dispositif 1 comprend un bassin de purification 10.

Sur les figures 1 et 2, le bassin de purification dispose :
- d'une entrée d'eaux usées non traitées E ;
- d'une entrée d'air A ;
- d'une sortie d'eaux usées traitées S.

Tel qu'illustré sur la figure 1, un complexe d'étanchéité 9 se situe sur les côtés et le fond du bassin. Il prend la forme, par exemple, d'une géomembrane de polyéthylène haute densité (PEHD), posée sur un géotextile anti-poinçonnement.

Des bordures 90 sont également disposées autour du bassin, ces bordures peuvent être en polypropylène, en bois ou en béton. Elles permettent notamment de protéger le filtre des eaux de ruissellement et de protéger le complexe d'étanchéité des dégradations extérieures (UV, rongeurs, malveillance...).

Le bassin de purification 10 comporte au moins deux couches superposées de matériaux filtrants : une couche inférieure 100 et une couche supérieure 101 située au-dessus de la couche inférieure.

Dans la couche supérieure de matériaux filtrants, des végétaux 8 sont plantés pour favoriser la déshydratation des matériaux particulaires retenus en surface, aider au maintien de la perméabilité du filtre et favoriser l'activité microbienne aérobie à proximité des racines et rhizomes. Ces végétaux sont par exemple des végétaux de type *Phragmite, Glyceria, Scirpus, Phalaris.*

Cette couche supérieure 101 est non saturée en eau. Elle comporte des moyens d'aération passive. Ces moyens d'aération passive comprennent un réseau de drains d'aération 4 situé au fond de la couche supérieure.

La couche inférieure 100 est saturée en eaux et située dans le fond du bassin. Cette couche inférieure comprend des moyens de drainage des eaux usées traitées.

Le dispositif comprend aussi des moyens de rétention d'eau 2 apte à maintenir, dans le bassin en fonctionnement, une garde d'eau d'une hauteur prédéterminée qui correspond à la totalité de la hauteur de la couche inférieure 100.

Tel qu'illustré par les figures, le dispositif 1 comprend un système d'aération actif 3 de la couche inférieure saturée. Ce système d'aération actif est situé dans le fond de la couche inférieure et s'étend sur essentiellement toute la surface couverte par la couche inférieure du bassin de purification.

Selon des modes de réalisation particuliers, le système d'aération actif de la couche inférieure saturée est un système intermittent pouvant par exemple comprendre :
- un programmateur horaire ;
- un interrupteur automatique couplé à des capteurs situé dans le dispositif de traitement et destinés à déterminer des paramètres d'oxygène dissous et/ou de potentiel d'oxydo-réduction dans la couche inférieure.

Le bassin de purification comporte des systèmes d'apport d'eaux usées 5 par bâchées.

Le dispositif peut comporter un ou plusieurs bassins de purification montés en parallèle.

Dans le cas de plusieurs bassins en parallèle, ceux-ci peuvent être alimentés en eaux usées en alternance : les systèmes d'apport d'eaux usées de chaque bassin forment un réseau d'apport d'eaux usées comportant des moyens d'alimentation en alternance desdits systèmes d'apport. Par exemple, ces moyens d'alimentation en alternance consistent en des vannes manuelles ou automatiques, disposées entre le système d'alimentation (chasse automatique ou poste de relevage) et les bassins. Cette alternance permet notamment d'avoir des périodes de repos favorables à la déshydratation et la minéralisation des matières particulaires retenues en surface.

Toujours dans le cas de plusieurs bassins en parallèle, le réseau d'aération artificielle (formé par les systèmes d'aération intermittents de la couche inférieure saturée de chaque bassin) peut également être alimenté en alternance : le réseau d'aération comportant des moyens d'alimentation en air en alternance des systèmes d'aération. Par exemple, les moyens d'alimentation en air en alternance prennent la forme de vannes manuelles ou automatiques, disposées entre le système de distribution d'air (pompe, ventilateur, surpresseur) et les bassins.

Un dispositif de traitement des eaux usées selon l'invention peut fonctionner et être adapté de la manière décrite ci-après.

Le dispositif peut être alimenté avec des eaux usées brutes préalablement dégrillées (maille de 20 à 30 mm) pour éliminer les déchets les plus grossiers. Les eaux usées sont ensuite envoyées en surface du bassin en fonctionnement, grâce à une rampe d'alimentation des systèmes d'apport d'eaux usées 5 qui peut être aérienne ou enterrée (telle que représentée sur la figure 1). Afin d'avoir une bonne répartition sur toute la surface, le réseau d'alimentation formé par les systèmes d'apport est composé d'une nourrice principale 50 et de plusieurs diffuseurs 51, en dessous desquels sont installées des plaques anti-affouillement 6. Dans le cas d'une rampe d'alimentation enterrée, un regard de contrôle 500 peut être monté à l'extrémité de la nourrice principale, afin de permettre la vidange de la conduite, et éventuellement son nettoyage.

L'arrivée des effluents se fait de manière discontinue, par « bâchée », ce qui favorise une bonne répartition sur toute la surface et une meilleure oxygénation de la couche supérieure 101 non saturée par convection. L'alimentation par bâchée peut être obtenue par une chasse automatique fonctionnant sans énergie si le dénivelé le permet. Dans le cas de terrains sans pente ou à pente très faible, l'alimentation comporte un poste de relevage contenant au moins une pompe.

Les eaux usées percolent verticalement dans la couche supérieure non saturée du bassin constituée, par exemple, d'au moins deux sous-couches de gravier de granulométrie différente. On a par exemple une première sous-couche 1010 de granulométrie de 2 à 6 mm en surface, sur une hauteur comprise de 15 à 40 cm, puis une deuxième sous-couche 1011, située en-dessous de la première sous-couche, de granulométrie plus grossière de 4 à 20 mm sur une hauteur de 15 à 30 cm. La couche supérieure présente ainsi une hauteur H2 ≥ 30 cm. De plus, une couche de compost 102 de 5 à 15 cm de hauteur peut également être ajoutée en surface, afin d'améliorer les performances de filtration et favoriser la croissance des roseaux au démarrage.

Le réseau de drains d'aération 4 reliés à au moins une cheminée 40 d'aération passive peut être positionné au bas de cette couche supérieure afin de contribuer à la maintenir en condition aérobie, y compris pendant les phases d'arrêt de l'aération artificielle par le système d'aération actif de la couche inférieure saturée.

Le réseau de drains d'aération 4 est particulièrement recommandé dans le cas d'un effluent chargé en matières particulaires, afin de favoriser le traitement des matières particulaires retenues en surface par des mécanismes de déshydratation par drainage et de minéralisation aérobie.

Les eaux usées partiellement traitées atteignent ensuite la couche inférieure 100 saturée en eaux disposant d'une aération artificielle au moyen du système d'aération actif. Le niveau de l'eau est maintenu grâce aux moyens de rétention d'eau 2 qui prennent la forme d'un regard de mise en charge 6 en sortie. Cette couche inférieure est constituée d'au moins une sous-couche de gravier de granulométrie de 10 à 40 mm sur une hauteur H1 de 40 à 150 cm.

Le système d'aération actif 3 est positionné dans le fond du bassin et comporte un réseau de distribution d'air composé de plusieurs tuyaux percés permettant une distribution homogène de l'air sur toute la surface de la couche inférieure. Les tuyaux peuvent par exemple être des tuyaux avec goutteurs auto-régulants qui assurent une distribution uniforme, même sur de grandes longueurs, et présentent une grande résistance au colmatage. L'oxygène présent dans l'air envoyé dans le fond du bassin est diffusé dans la phase liquide de la couche inférieure saturée et est ainsi disponible pour des dégradations microbiennes aérobies. Les moyens d'alimentation en air peuvent par exemple comprendre une pompe, un ventilateur ou un surpresseur. Le débit d'air est compris entre 0,1 et 1,5 Nm³/m².h selon la charge polluante à traiter.

Tel qu'expliqué précédemment, le système d'aération peut être un système intermittent.

Les eaux traitées sont ensuite récupérées par les moyens de drainage via au moins un drain de collecte transversal 7 (tel que représenté sur la figure 1) relié à une canalisation d'évacuation 70 qui débouche sur le regard de mise en charge 6. Ce regard est muni d'un coude avec une sortie d'eau dont le niveau peut être réglable (entre le fond du bassin et le niveau haut de la couche inférieure saturée, correspondant au niveau bas du drain d'aération passive intermédiaire si existant). Un bouchon de vidange 71 à la base du coude permet de vidanger si nécessaire la couche inférieure saturée, par exemple en cas de défaut d'aération artificielle (coupure électrique, panne du compresseur...), afin de prévenir des risques d'anoxie prolongée en cas d'effluents fortement chargés et des risques de colmatage. Les moyens de drainage peuvent également être connectés aux cheminées 40 d'aération passive.

Les eaux traitées sont ensuite évacuées vers le milieu naturel (rivière, fossé, lac, mer...), en infiltration souterraine, vers une zone de stockage pour réutilisation, ou encore vers un traitement de finition.

La capacité d'un tel dispositif de traitement selon l'invention peut être augmentée en prévoyant un filtre de surface supérieure, ou en ajoutant un ou plusieurs filtres ou ensembles de filtres supplémentaires, alimentés en parallèle et/ou en alternance.

Selon des variantes envisageables, les différentes couches de graviers de différentes granulométries peuvent être remplacées par d'autres types de matériaux filtrant, permettant la fixation et le développement des bactéries épuratrices et/ou avec des propriétés chimiques permettant l'élimination de certains polluants :
- matériaux poreux présentant une surface spécifique élevée, comme le schiste ou l'argile expansée ;
- matériaux présentant des propriétés d'échange d'ions comme la zéolithe, avec notamment la capacité de retenir les ions ammonium (NH₄⁺);
- matériaux permettant la précipitation et/ou l'adsorption des phosphates comme les laitiers d'aciéries, l'apatite ;
- matériaux permettant l'apport de carbone pour la dénitrification, comme les copeaux de bois ou autres dérivés de produits organiques ;
- matériaux apportant de l'alcalinité pour tamponner le pH.

Selon la composition de l'effluent à traiter, le dispositif de traitement des effluents peut comporter des éléments supplémentaires, en amont ou en aval. En amont, le dispositif peut comprendre, par exemple, un dispositif de dégraissage, un réservoir de stockage, un dispositif de neutralisation des effluents et/ou un système d'ajout de nutriments afin d'améliorer la biodégradabilité de l'effluent. En aval, le dispositif peut comprendre, par exemple, un dispositif de désinfection, un filtre à sable, un dispositif de déphosphatation et/ou une zone de rejet végétalisée.

## Revendications

1. Dispositif (1) de traitement des eaux usées de type filtre planté dans lequel la circulation des eaux usées est à écoulement vertical, le dispositif comprenant un bassin de purification (10) destiné à recevoir des eaux usées, le bassin comportant au moins deux couches superposées de matériaux filtrants :
- une couche inférieure (100) saturée en eaux située dans le fond du bassin et comprenant des moyens de drainage ;
- une couche supérieure (101) non saturée en eaux située au- dessus de la couche inférieure, la couche supérieure comportant des moyens d'aération passive, les moyens d'aération passive comportant un réseau de drains d'aération (4) situé au fond de la couche supérieure ;
**caractérisé en ce que** le dispositif comprend un système d'aération actif (3) de la couche inférieure saturée, le système d'aération actif (3) étant situé dans le fond de la couche inférieure et étant réparti essentiellement sur toute la surface couverte par la couche inférieure du bassin de purification, le système d'aération actif étant destiné à aérer de manière homogène la totalité de la couche inférieure, le système d'aération actif (3) de la couche inférieure (100) saturée étant un système d'aération actif intermittent,
**en ce que** le dispositif comprend des moyens de rétention d'eau (2) aptes à maintenir, dans le bassin en fonctionnement, une garde d'eau d'une hauteur prédéterminée qui correspond à la totalité de la hauteur de la couche inférieure,
et **en ce que** la couche supérieure présente une hauteur H2 > 30 cm.

2. Dispositif (1) de traitement des eaux usées selon la revendication 1, **caractérisé en ce que** le bassin de purification (10) comporte des systèmes d'apport d'eaux usées (5) par bâchées.

3. Dispositif (1) de traitement des eaux usées selon la revendication 1, **caractérisé en ce que** le système d'aération actif intermittent comporte un programmateur horaire.

4. Dispositif (1) de traitement des eaux usées selon la revendication 1, **caractérisé en ce qu'**il comporte des capteurs destinés à déterminer des paramètres d'oxygène dissous et/ou de potentiel d'oxydo-réduction dans la couche inférieure (100), et **en ce que** le système d'aération actif intermittent comporte un interrupteur automatique couplé aux capteurs.

5. Dispositif (1) de traitement des eaux usées selon l'une quelconque des revendications précédentes, **caractérisé en ce qu'**il comprend une pluralité de bassins de purification (10) montés en parallèle.

6. Dispositif (1) de traitement des eaux usées selon la revendication 3 ou 5, **caractérisé en ce que** les systèmes d'aération actifs intermittents de la couche inférieure saturée de chaque bassin de purification (10) forment un réseau d'aération, et **en ce que** le réseau d'aération comporte des moyens d'alimentation en air en alternance des systèmes d'aération actifs intermittents.

7. Dispositif (1) de traitement des eaux usées selon la revendication 2 et les revendications 5 ou 6, **caractérisé en ce que** les systèmes d'apport d'eaux usées (5) de chaque bassin de purification (10) forment un réseau d'apport d'eaux usées, le réseau d'apport d'eaux usées comportant des moyens d'alimentation en alternance des systèmes d'apport d'eaux usées.

## Patentansprüche

1. Abwasserbehandlungsvorrichtung (1) vom Typ bepflanzter Filter, wobei die Zirkulation der Abwässer vertikal verläuft, wobei die Vorrichtung ein Klärbecken (10) zur Aufnahme der Abwässer umfasst, wobei das Becken mindestens zwei übereinanderliegende Schichten von Filtermaterialien aufweist:
- eine untere, mit Wasser gesättigte Schicht (100), die sich im Boden des Beckens befindet und Drainagemittel umfasst;
- eine obere, nicht mit Wasser gesättigte Schicht (101), die sich über der unteren Schicht befindet, wobei die obere Schicht passive Belüftungsmittel umfasst, wobei die passiven Belüftungsmittel ein Netz von Belüftungsdrains (4) umfassen, das sich am Boden der oberen Schicht befindet;
**dadurch gekennzeichnet, dass** die Vorrichtung ein aktives Belüftungssystem (3) der gesättigten unteren Schicht umfasst, wobei sich das aktive Belüftungssystem (3) im Boden der unteren Schicht befindet und im Wesentlichen über die gesamte Oberfläche verteilt ist, die von der unteren Schicht des Klärbeckens bedeckt ist, wobei das aktive Belüftungssystem dazu bestimmt ist, die gesamte untere Schicht gleichmäßig zu belüften, wobei das aktive Belüftungssystem (3) der gesättigten unteren Schicht (100) ein intermittierendes aktives Belüftungssystem ist,
und dadurch, dass die Vorrichtung Wasserrückhaltemittel (2) umfasst, die imstande sind, in dem Becken im Betrieb eine Wasserstandshöhe in einer vorher festgelegten Höhe zu halten, welche der Gesamthöhe der unteren Schicht entspricht,
und dass die obere Schicht eine Höhe H2 > 30 cm aufweist.

2. Abwasserbehandlungsvorrichtung (1) nach Anspruch 1, **dadurch gekennzeichnet, dass** das Klärbecken (10) Abwasserzufuhrsysteme (5) durch Befüllung umfasst.

3. Abwasserbehandlungsvorrichtung (1) nach Anspruch 1, **dadurch gekennzeichnet, dass** das intermittierende aktive Belüftungssystem einen Timer aufweist.

4. Abwasserbehandlungsvorrichtung (1) nach Anspruch 1, **dadurch gekennzeichnet, dass** sie Sensoren zum Bestimmen der Parameter gelösten Sauerstoffs und/oder des Oxidationsreduktionspotentials in der unteren Schicht (100) umfasst, und dass das intermittierende aktive Belüftungssystem einen mit den Sensoren gekoppelten Automatikschalter aufweist.

5. Abwasserbehandlungsvorrichtung (1) nach einem der vorstehenden Ansprüche, **dadurch gekennzeichnet, dass** sie eine Vielzahl von parallel angeordneten Klärbecken (10) umfasst.

6. Abwasserbehandlungsvorrichtung (1) nach Anspruch 3 oder 5, **dadurch gekennzeichnet, dass** die intermittierenden aktiven Belüftungssysteme der gesättigten unteren Schicht jedes Klärbeckens (10) ein Belüftungsnetz bilden, und dass das Belüftungsnetz Mittel zur Versorgung mit Luft alternierend mit den intermittierenden aktiven Belüftungssystemen aufweist.

7. Abwasserbehandlungsvorrichtung (1) nach Anspruch 2 und den Ansprüchen 5 oder 6, **dadurch gekennzeichnet, dass** die Abwasserzufuhrsysteme (5) jedes Klärbeckens (10) ein Abwasserzufuhrnetz bilden, wobei das Abwasserzufuhrnetz Versorgungsmittel alternierend mit den Abwasserzufuhrsystemen umfasst.

## Claims

1. Device (1) for the treatment of wastewater of the vertical flow constructed wetland type, the device comprising a purification basin (10) intended to receive wastewater, the basin comprising at least two superimposed layers of filtering materials:
- a water-saturated lower layer (100) located at the bottom of the basin and comprising draining means;
- a non-water-saturated upper layer (101) located above the lower layer, the upper layer comprising passive aeration means, the passive aeration means comprising a network of aeration drains (4) located at the bottom of the upper layer;
**characterized in that**, the device comprises an active aeration system (3) of the lower saturated layer, the active aeration system (3) being located at the bottom of the lower layer and being distributed basically over the entire surface covered by the lower layer of the purification basin, the active aeration system being intended to aerate in a uniform manner the entire lower layer, the active aeration system (3) of the lower saturated layer (100) being an intermittent aeration system,
**in that** the device comprises water-retention means (2) capable of maintaining, in the basin during operation, a water seal of a predetermined height that corresponds to the full height of the lower layer,
and **in that** the upper layer has a height H2 > 30 cm.

2. Device (1) for the treatment of wastewater according to claim 1, **characterized in that** the purification basin (10) comprises systems for supplying wastewater (5) by tankful.

3. Device (1) for the treatment of wastewater according to claim 1, **characterized in that** the intermittent active aeration system comprises a timer.

4. Device (1) for the treatment of wastewater according to claim 1, **characterized in that** it comprises sensors intended to determine parameters of dissolved oxygen and/or of oxidation/reduction potential in the lower layer (100), and **in that** the intermittent active aeration system comprises an automatic switch connected to the sensors.

5. Device (1) for the treatment of wastewater according to any of the preceding claims, **characterized in that** it comprises a plurality of purification basins (10) mounted in parallel.

6. Device (1) for the treatment of wastewater according to claim 3 or 5, **characterized in that** the intermittent active aeration systems of the saturated lower layer of each purification basin (10) form an aeration network, **in that** the aeration network comprises means to supply air alternately to the intermittent active aeration systems.

7. Device (1) for the treatment of wastewater according to claim 2 and claims 5 or 6, **characterized in that** the systems for the intake of waste water (5) of each purification basin (10) form a wastewater intake network, the wastewater intake network comprising means to supply the wastewater intake systems alternately.
